# EUROPEAN PATENT APPLICATION

(11) **EP 1 191 427 A2**
(43) Date of publication of application: **27.03.2002**
(21) Application number: 01106588.5
(22) Date of filing: 15.03.2001
(51) Int. Cl.: G06F 1/32

(54) **Information processing apparatus and display light control method**

(30) Priority: 22.09.2000 JP 2000289315
(71) Applicant: KABUSHIKI KAISHA TOSHIBA, Kawasaki-shi (JP)
(72) Inventor: Ogawa, Kiyohisa, c/o Kabushiki Kaisha Toshiba, Tokyo 105-8001 (JP)
(74) Representative: Henkel, Feiler, Hänzel

(57) **Abstract**

An information processing apparatus has a display (14) with a light source for illumination (18). A table (12d) holds a monitor time for monitoring a state where an input operation is being stopped for each application program or its operating status. A screen control program (12a) measures an elapsed time from a point of time when an input operation for the application program is stopped. The screen control program (12a) determines, based on the held monitor time and the measured elapsed time, whether or not the elapsed time for the application program has reached the monitor time, and reduces brightness of the light source (18) when the elapsed time has reached the monitor time.

## Description

The present invention relates to an information processing apparatus including a display device with a display light, and a display light control method.

Conventionally, in a mobile information terminal, etc., having a liquid crystal display (LCD) with a display light such as a front light or back light, the brightness of the display light is reduced after a predetermined time has passed since the last operation by the user.

For example, Jpn. Pat. Appln. KOKAI Publication No. 11-126118 discloses a technique relating to a power-saving mechanism of an operating system. According to the mechanism, during execution of an application, it is determined whether the system is in a process wait state, in which no operation is required. If it is determined that the system is in the process wait state, the current supplied to the back light is reduced, thereby reducing the brightness of the back light.

According to the conventional art, including the technique disclosed in the above publication, the period of time between the last operation by the user and reduction of the brightness of the back light is fixed, irrespective of the kind of application.

However, in consideration of both the operability for the user and the power saving, it is not desirable to fix the period of time before reduction of the back light, irrespective of the kind of application and operating status. For example, the following problems occur: When the user wants to watch the display screen, the brightness of the back light may be lowered suddenly. On the contrary, even when the user no longer needs to watch the display screen, the brightness of the back light cannot be reduced immediately. In this case, power saving cannot be efficiently realized.

Accordingly, it is an object of the present invention to provide an information processing apparatus and a display light control method, in which the brightness of the display light is lowered at a suitable point of time according to the kind of currently running application/operating status, thereby improving both the operability for the user and the power-saving efficiency.

According to one aspect of the present invention, there is provided an information processing apparatus comprising: a display with a light source for illumination; means for holding a monitor time for monitoring a state where an input operation is being stopped for each application program or its operating status; means for measuring an elapsed time from a point of time when an input operation for the application program is stopped; means for determining, based on the held monitor time and the measured elapsed time, whether or not the elapsed time for the application program has reached the monitor time; and means for reducing brightness of the light source when the determining means determines that the elapsed time has reached the monitor time.

According to another aspect of the present invention, there is provided a display light control method applied to an information processing apparatus having a display with a light source for illumination, comprising: holding a monitor time for monitoring a state where an input operation is being stopped for each application program or its operating status; measuring an elapsed time from a point of time when an input operation for the application program is stopped; determining, based on the held monitor time and the measured elapsed time, whether or not the elapsed time for the application program has reached the monitor time; and reducing brightness of the light source when the elapsed time has reached the monitor time.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing a constitution of an information processing apparatus according to an embodiment of the present invention;
FIG. 2 is a perspective view showing an external appearance of the information processing apparatus of the embodiment;
FIG. 3 is a diagram showing detailed contents of the table shown in FIG. 1;
FIG. 4 is a diagram showing the screen for setting the contents of the table shown in FIG. 3;
FIG. 5 is a diagram showing a part of a modification of the table shown in FIG. 3;
FIGS. 6A and 6B are diagrams showing a mail-submission screen and an editing screen displayed on the LCD shown in FIG. 1;
FIGS. 7A and 7B are diagrams showing contents of the application information respectively corresponding to the screens shown in FIGS. 6A and 6B;
FIG. 8 is a flowchart showing an operation by an application;
FIG. 9 is a flowchart showing an operation by a screen control program; and
FIG. 10 is a flowchart showing procedures executed when an error occurs while the application is being executed.

An embodiment of the present invention will be described with reference to the accompanying drawings.

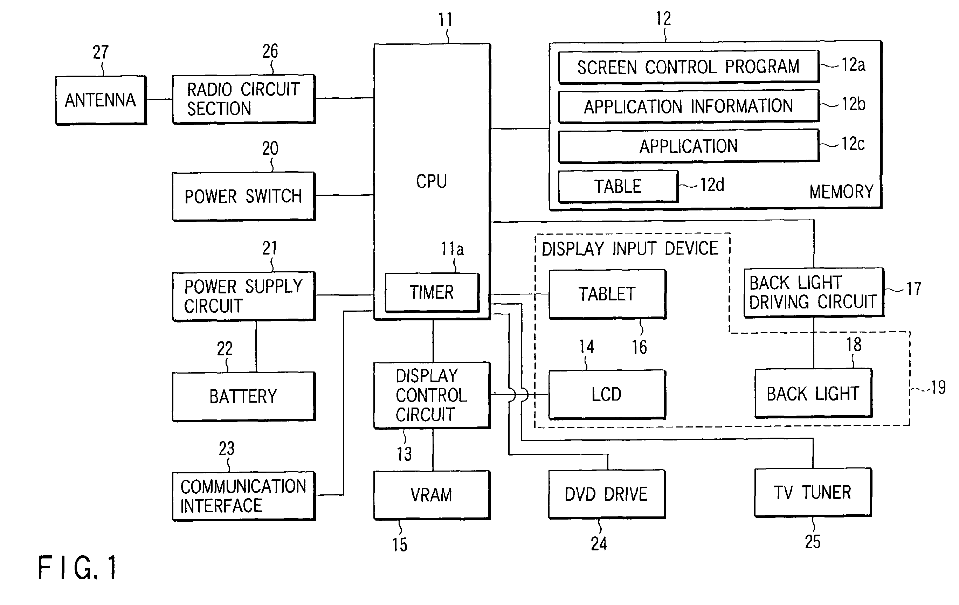

FIG. 1 is a block diagram showing a constitution of an information processing apparatus according to an embodiment of the present invention.

The information processing apparatus of this embodiment is a mobile information terminal driven by a battery. It can perform various functions by reading programs recorded in a recording medium and executing the read programs. When the user connects the apparatus to a radio communication apparatus (such as a cellular phone or a personal handy-phone system) on the other end of the phone via a radio communication function incorporated in the present information processing apparatus (corresponding to the function of a cellular phone or a personal handy-phone system), image information or sound information can be transmitted between the two apparatuses. The user can also watch an image or listen to a sound compatible with a DVD (digital versatile disk), a TV tuner, an MP3 (MPEG audio layer 3) and an AVI (audio visual interleaved file) using an AV function incorporated in the present information processing apparatus.

As shown in FIG. 1, the information processing apparatus of this embodiment includes a CPU 11, a memory 12, a display control circuit 13, an LCD 14, a VRAM 15, a tablet 16, a back light driving circuit 17, a back light 18, a display input device 19 (including the LCD 14, the tablet 16 and the back light 18), a power switch 20, a power supply circuit 21, a battery 22, a communication interface 23, a DVD drive 24, a TV tuner 25, a radio circuit section 26 and an antenna 27.

The CPU 11 controls the overall information processing apparatus. It performs various functions by executing programs stored in the memory 12. For example, the CPU executes a screen control program 12a stored in the memory 12, thereby achieving control for reducing the brightness of the back light (e.g., turning off the back light) at a suitable time point according to the (kind of) application which is currently running and operation status (or the contents of the screen).

The memory 12 stores various programs to be executed by the CPU 11 and data. The screen control program 12a, for controlling the screen according to the present invention, is one of those programs.

The screen control program 12a allows the user to know the following items of information by means of referring to the application information 12b: the identification information of the currently running application, the current operation status thereof, the monitor time (preset value) to monitor the state in which the input operation by the user is stopped, and the elapsed time (count value) which has elapsed since the input operation by the user is stopped.

The monitor time means a time for confirming that the user has not performed an input operation, on the occasion where the brightness of the back light is to be reduced. The monitor time is preset for each of the applications or the operating status thereof. In other words, the monitor time corresponds to the period between the time at which the input operation by the user is stopped and the time at which the user will not need to watch the screen any more.

The elapsed time, which has passed since the time point at which the input operation by the user is stopped, is measured by means of a timer 11a on the application information 12b. If there is no input operation until the elapsed time reaches the monitor time, the screen control program 12a carries out control for reducing the brightness of the back light.

If any error occurs in the currently running application 12c, the screen control program 12a increases the monitor time in the application information 12b by, for example, three minutes (the time which will be required for the user to complete a recovery process), thereby postponing the time at which the brightness of the back light is reduced.

The application information 12b includes the identification information of the currently running application, the current operating status, the corresponding monitor time (preset value), and the time (count value) that has elapsed since the input operation by the user is stopped.

It is desirable that the application information 12b further include status information indicating whether or not the brightness of the light 18 is reduced with respect to the currently running application.

The application 12c is a program that is loaded into the memory 12 and currently running. For example, it may be an application which supports mail, a browser, a DVD or a TV tuner. Needless to say, a plurality of applications may be running on the memory 12.

When the application 12c is loaded into the memory 12, the identification information of the application 12c and the information representing the operating status are reflected in the application information 12b. The application 12c obtains a monitor time corresponding to the application and the operating status with reference to a table 12d (to be described later). It reflects the monitor time in the application information 12b in association with the application and the operating status. One or more of these processes may be executed by the screen control program 12a.

In this embodiment, the application for mail is used to edit mail on the LCD 14, send or receive mail to or from another device through the communication interface 23 and display the received mail on the LCD 14. The application for a browser is used to connect the apparatus to a predetermined network through the communication interface 23, so that the user can browse a page offered by another device on the LCD 14. The application for the DVD is used to display on the LCD 14 the information read by the DVD drive 24. The application program for a TV tuner is used to display on the LCD 14 the contents of a broadcast program received by the TV tuner 25.

In the table 12d, the time for monitoring the state in which the input operation is stopped (i.e., monitor time) is set for each application or the operating status thereof. The monitor time in the table 12d can be set by the user on the setting screen of the LCD 14.

The display control circuit 13 controls image display on the LCD 14 under the control of the CPU 11. The display control circuit 13 writes, in the VRAM, data on an image to be displayed on the LCD 14, and causes the LCD 14 to display, for example, a color image corresponding to the image data.

The LCD 14 carries out image display, for example, color image display, under the control of the display control circuit 13.

The VRAM 15 stores image data of an image to be displayed on the LCD 14.

The tablet 16 is, for example, a pressure-sensitive tablet, through which the user inputs operating instructions or image patterns as coordinates data. The tablet 16 is transparent, so that light can be transmitted therethrough, and is laminated on the display screen of the LCD 14 to form a unitary one-piece structure. Therefore, while the user is observing the contents (various objects such as a menu) displayed on the LCD 14, he or she can directly input the corresponding coordinates data to the position of the content of the display. A keyboard may be used as an input device in place of the tablet.

The back light driving circuit 17 is used to emit light by driving the back light 18. It can change the brightness level of the back light 18 in accordance with an instruction for a set level supplied from the CPU 11.

The back light 18, driven by the back light driving circuit 17, is a light source attached to the rear surface of the LCD 14.

The display input device 19 includes the aforementioned LCD 14, tablet 16 and the back light 18.

The power switch 20 is operated to turn on or off the power source of the information processing apparatus.

The power supply circuit 21 supplies power provided by the battery 22 to the respective portions of the information processing apparatus of the present invention. It also monitors the status of the battery 22 (e.g. the charge remaining in the battery).

The battery 22 provides power for operating the information processing apparatus of the present invention.

The communication interface 23 is an interface for establishing communication between the apparatus of the present invention and another radio communication apparatus (e.g., a cellular phone or a personal handy-phone system) or the like. It is used to send or receive character information (e.g. mail) and sound or image information to or from an external apparatus by radio communications.

The DVD drive 24, for driving a DVD, reads information recorded on the DVD under the control of the CPU 11.

The TV tuner 25 selects the channel corresponding to a TV station in accordance with the user's instructions, and receives the contents of a broadcast program. The contents of the broadcast program is not necessarily displayed on the LCD 14 immediately, but may be stored in the memory and displayed later when the user wishes to watch it.

The radio circuit section 26 performs radio communication functions of a cellular phone or a personal handy-phone system. It is used to connect the apparatus of the present invention and a radio communication apparatus (a cellular phone or a personal handy-phone system) on the other end of the phone under the control of the CPU 11, and transmit and receive image information or sound information.

The antenna 27 transmits and receives a radio wave when a radio communication is performed.

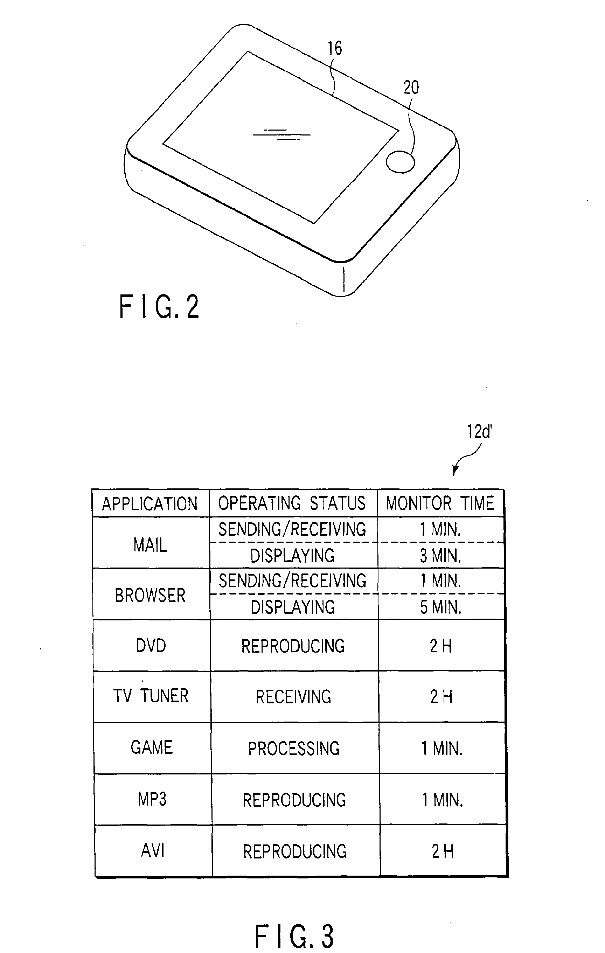

FIG. 2 is a perspective view showing an external appearance of the information processing apparatus of the embodiment.

As shown in FIG. 2, the information processing apparatus of this embodiment is compact and portable. For example, the apparatus has a palm-size casing. The display input device 19 (including the LCD 14, the tablet 16 and the back light 18) is provided on the upper surface of the casing. The power switch 20 is provided in an end portion thereof. The user can input data by means of, for example, a pen, on the display input device 19.

FIG. 3 is a diagram showing detailed contents of the table 12d shown in FIG. 1.

As shown in FIG. 3, in the table 12d, the time for monitoring the state (i.e., monitor time) is set for each application or the operating status thereof.

For example, in the case of the applications for mail and a browser, the monitor time in the sending/receiving operation is different from that in the displaying operation. More specifically, a relatively short monitor time (e.g., one minute) is set for a status of, for example, mail sending, where the user is not required to watch the display screen for a long time. On the other hand, when mail is not being sent but, for example, the text of received mail is displayed, a relatively long monitor time (e.g., three minutes) is set. The same applies to the application for a browser.

Further, the monitor time set for the applications for the DVD, the TV tuner and the AVI is longer than that for the applications for mail and the browser. It is considered that the user continuously watches the display screen for a long period of time, when information is being reproduced from a DVD or an AVI or a TV program is being received. Therefore, a sufficient period of monitor time (for example, two hours) is set for these applications.

As regards the applications for a game and MP3, it is unnecessary for the user to watch the display screen for a long period of time after the input operation by the user is stopped. Therefore, a relatively short period of monitor time (for example, one minute) is set.

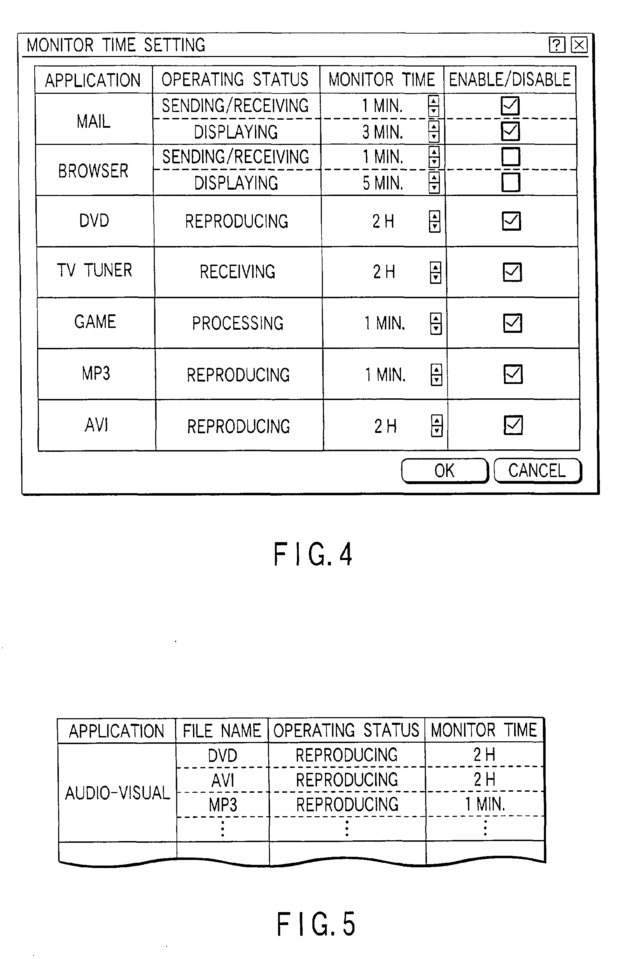

FIG. 4 is a diagram showing the screen for setting the contents of the table 12d shown in FIG. 3.

The display control program 12a causes the LCD 14 to display a monitor time setting screen, thereby providing a user interface so that the user can set "monitor time" and whether the monitor operation is "enable or disable" for each of the programs and the operating status thereof.

In a case where the monitor operation is enabled, the brightness of the back light 18 is capable of being reduced by the program 12a, and in a case where the monitor operation is disabled, the brightness of the back light 18 is not capable of being reduced by the program 12a.

In the example shown in FIG. 4, only the monitoring of the operation of the application for a browser is set to be disable (in respect of both "sending/receiving" and "displaying" operations), and the monitoring of all operations of the other applications are set to be enable. The contents set by the user are reflected in the table 12d. The process of displaying the set screen and setting the monitor time or the like are executed by the screen control program 12a.

FIG. 5 is a diagram showing a part of a modification of the table shown in FIG. 3.

FIG. 5 shows a modification of the table, which is applied to a case where application programs (in a file format) concerning reproduction of an image and a sound are managed by one program, i.e., an audio-visual application. In this modification, the audio-visual application calls the file corresponding to the user's request, and controls reproduction of the application contained in the file.

The files shown in the table of FIG. 5 correspond to applications relating to reproduction of an image or sound, for example, the applications for the DVD, AVI and PM3.

In this table also, the monitor time is set for each of the files or the operating status of the application in the file. As in the case of FIG. 4, the user can set the contents of the table on the screen. More specifically, the user can set "monitor time" and whether the monitor operation is "enable or disable" for each of the files or the operating status of the application in the file.

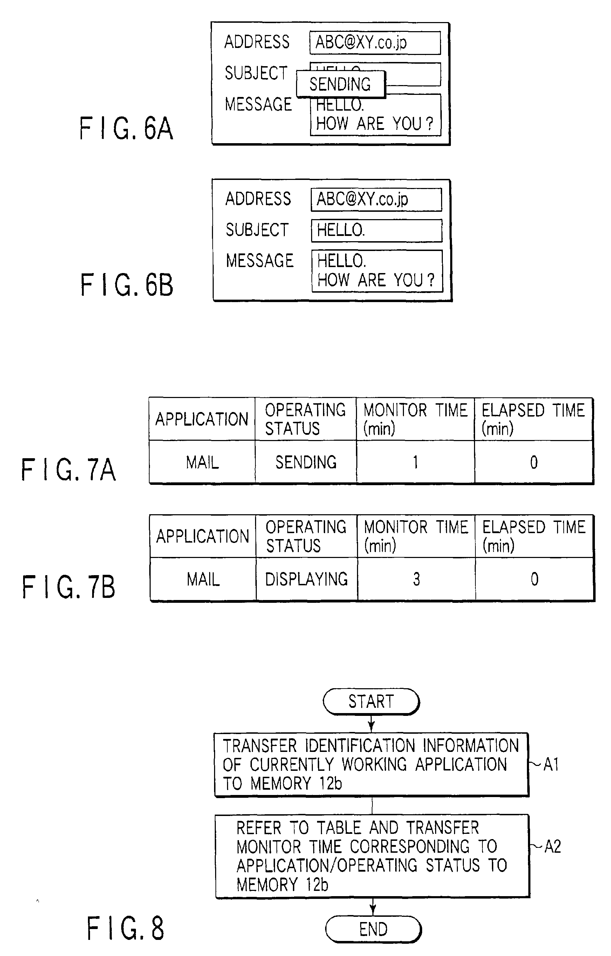

FIGS. 6A and 6B are diagrams showing a mail-sending screen and an editing screen displayed on the LCD 14. FIGS. 7A and 7B are diagrams showing contents of the application information 12b respectively corresponding to the screens shown in FIGS. 6A and 6B.

As shown in FIG. 6A, when the LCD 14 displays a screen showing the mail sending status, the CPU 11 or the currently working application performs control to ensure that the contents shown in FIG. 7A are reflected in the application information 12b. On the other hand, as shown in FIG. 6B, when the LCD 14 displays a screen showing the edit contents, the CPU 11 or the currently working application performs control to ensure that the contents shown in FIG. 7B are reflected in the application information 12b. However, in FIGS. 7A and 7B, if the CPU 11 starts counting, the value of the elapsed time in the application information 12b increases. If the counter is reset, the value returns to 0.

FIGS. 7A and 7B show an example in which the application information 12b has information on only one application. However, in the case where a plurality of applications are running on the memory 12, a plurality of pieces of application information corresponding to the respective applications are prepared. In this case, the CPU 11 executes screen control based on, for example, the application information in which the longest monitor time is set.

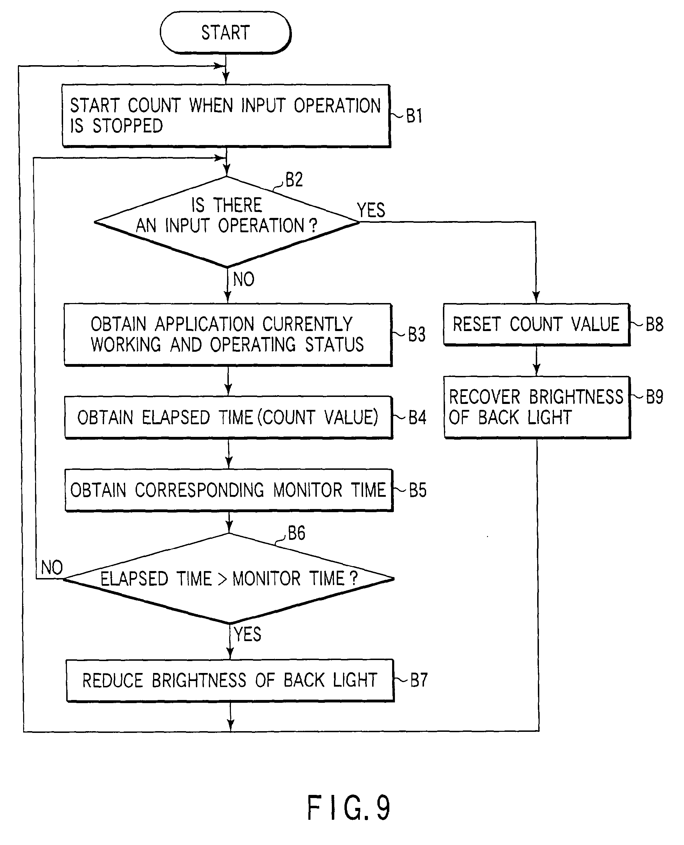

A screen control operation of this embodiment will now be described with reference to the flowcharts shown in FIGS. 8 and 9. FIG. 8 shows procedures executed by the application 12c and FIG. 9 shows procedures executed by the screen control program 12a.

As shown in FIG. 8, when loaded into the memory 12, the application 12c reflects its own identification information and the information representing the operating status in the application information 12b (step A1). The application 12c obtains a monitor time (preset value) corresponding to the application and the operating status with reference to the table 12d, and reflects the monitor time in the application information 12b in association with the application and the operating status (step A2).

In a periodic monitor routine shown in FIG. 9, the program 12a starts count at point of time when the input operation by the user is stopped (step B1). Thereafter, the program 12a determines whether there is a new input operation by the user (step B2).

If there is no new input operation by the user, the program 12a obtains the application currently working and the operating status with reference to the application information 12b (step B3), obtains the elapsed time (count value) (step B4), and obtains the corresponding monitor time (step B5).

Further, the program 12a determines whether the elapsed time (count value) reaches the monitor time (whether the count value reaches the monitor time) (step B6). If the elapsed time reaches the monitor time, the program 12a issues to the back light driving circuit 17 an instruction for reducing the brightness of the back light 18 (step B7) and the flow returns to the step B1. If not, the flow returns to the step B2.

It is to be noted that, at step B7, the program 12a sets the storing status information in the table 12b to indicate that the brightness of the back light 18 is reduced.

If there is a new input operation in the step B2, the program 12a resets the count value (step B8). If the brightness of the back light is reduced (i.e., if the status information in the table 12b indicates that the brightness of the back light 18 is reduced), the program 12a recovers the brightness of the back light to a normal state (step B9) and the flow returns to the step B1.

It is to be noted that, at step B9, the program 12a sets the storing status information in the table 12b to indicate that the brightness of the back light 18 is not reduced.

In the above process routine, if an error occurs in the working application 12c and a recovery process by the user is required, the monitor time in the application information 12b is increased by, for example, three minutes, to postpone the time at which reduction of the brightness of the back light is started. In this case, it is preferable that the screen control program 12a be constructed to provide a user interface, so that the user can preset "an increase of the monitor time in case of a processing error" for each application or the operation status thereof in the setting screen shown in FIG. 4. The increase in this case is set as a time that will be required for the user to complete a recovery process.

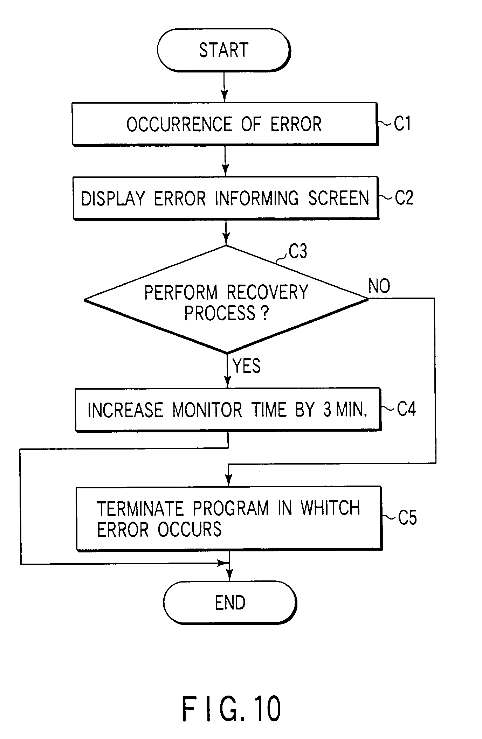

Procedures executed by means of the screen control program 12a, in case of a processing error in the working application 12c, will now be described with reference to the flowchart shown in FIG. 10.

For example, if an error occurs in the working application for mail when a mail is being sent (step C1), a screen for informing the user of the occurrence of the error is displayed (step C2). This screen displays, for example, an item for requesting the user to determine whether a recovery process is to be executed or not. If the user instructs to perform a recovery process (YES in step C3), the monitor time in the application information 12b is increased by, for example, three minutes (step C4). As a result, the time at which reduction of the brightness of the back light is started is postponed. On the contrary, if the user does not instruct to perform a recovery process (NO in step C3), the application for mail in which the error occurs is terminated (step C5).

As described above, the screen control program 12a provides an user interface to allow the user to determine whether to perform a recovery process, when an error occurs in the currently working application.

With the above operation, the brightness of the back light is not reduced while the user is performing a recovery process. Therefore, the user can continue the recovery process efficiently.

The above operation shows a technique of delaying a point of time when the brightness of the back light 18 is reduced. Specifically, step C4 shows increasing the monitor time in the application information 12b. Instead, it is possible to adopt an operation of stopping the counting of the elapsed time until the recovery is completed from the occurrence of the error.

By providing a user interface to allow a user to set an amount of time to be delayed, each user can obtain sufficient time for the recovery according to user's facility for each application program or its operating status.

As has been described above, according to this embodiment, a relatively long monitor time is set for the status in which the user is not required to observe the display screen for a long period of time, e.g., the status of mail sending. In this case, therefore, the brightness of the back light is reduced immediately, thereby improving the power-saving efficiency. On the other hand, a relatively long monitor time is set for the status in which a mail is edited or a text of a received mail is displayed on the screen. Therefore, even if the input operation is continuously stopped in such a status, the brightness of the back light is not reduced immediately, so that the user can continue to observe the screen.

Further, a fully longer monitor time is set for the status in which information is being reproduced from a DVD or an AVI or a TV program is being received. Therefore, even if the input operation is continuously stopped in such a status, the brightness of the back light is not reduced immediately, so that the user can continue to observe the screen.

Further, the monitor time in the application information is increased when an error occurs while the application is being executed. Therefore, even if the input operation is continuously stopped in such a status, the brightness of the back light is not reduced immediately, so that the user can continue the recovery process efficiently on the screen.

Thus, the monitor times are set to details in accordance with the kind of the currently working application and the operating statues. Therefore, both the operability for the user and the power saving can be improved efficiently.

A system of the embodiment described above can be stored as a computer-operable program in a storage medium, such as a magnetic disk (floppy disk, hard disk, etc.), an optical disk (CD-ROM, DVD, etc.) and a semiconductor memory. It is possible to provide the above program to various apparatuses through a communication media. In this case, the computer reads the program recorded in the recording medium, or receives the program through the communication medium. Then, the computer is controlled by the program, thereby executing the aforementioned process.

The present invention is not limited to the above embodiment, but can be modified variously within the scope of the gist of the invention. For example, in the above embodiment, the back light is used as a display light. However, a front light (or a side light) may be employed instead of the back light. The back light is a system for irradiating the liquid crystal or the like by means of light emitted from the light source located behind the panel of the display device. On the other hand, in the front light system, the liquid crystal or the like is irradiated by means of light emitted from the light source located on a side surface (in a front portion) of the panel of the display device. In short, any light that irradiates the display portion can be employed in the present invention, regardless of the irradiating method.

As has been described above in detail, with the present invention, the brightness of the display light is lowered at a suitable point of time according to the kind of currently running application/operating status, thereby improving both the operability for the user and the power-saving efficiency.

## Claims

1. An information processing apparatus, **characterized by** comprising:
a display (14) with a light source (18) for illumination;
means (12d) for holding a monitor time for monitoring a state where an input operation is being stopped for each application program or its operating status;
means (12a, 12b) for measuring an elapsed time from a point of time when an input operation for the application program is stopped;
means (12a) for determining, based on the held monitor time and the measured elapsed time, whether or not the elapsed time for the application program has reached the monitor time; and
means (12a) for reducing brightness of the light source when the determining means determines that the elapsed time has reached the monitor time.

2. The apparatus according to claim 1, **characterized by** further comprising:
means (12b) for storing status information indicating whether or not the brightness of the light source is reduced; and
means (12a), responsive to an input operation for the application program, for restoring the brightness of the light source in a case where the status information indicates that the brightness of the light source is reduced.

3. The apparatus according to claim 1, **characterized by** further comprising:
means (12a) for providing a user interface to allow a user to set the monitor time for each application program or its operating status.

4. The apparatus according to claim 1, **characterized by** further comprising:
means (12a) for providing a user interface to allow a user to enable/disable a monitor operation for each application program or its operating status, wherein
in a case where the monitor operation is enabled, the brightness of the light source is capable of being reduced by the reducing means, and in a case where the monitor operation is disabled, the brightness of the light source is not capable of being reduced by the reducing means.

5. The apparatus according to claim 1, **characterized by** further comprising:
means (12a) for, in a case where an error occurs in the application program, delaying a point of time when the reducing means reduces the brightness of the light source.

6. The apparatus according to claim 5, **characterized by** further comprising:
means (12a) for providing a user interface to allow a user to set an amount of time to be delayed by the delaying means for each application program or its operating status.

7. A display light control method applied to an information processing apparatus having a display with a light source for illumination, **characterized by** comprising:
holding a monitor time for monitoring a state where an input operation is being stopped for each application program or its operating status;
measuring an elapsed time from a point of time when an input operation for the application program is stopped (B1 to B4);
determining, based on the held monitor time and the measured elapsed time, whether or not the elapsed time for the application program has reached the monitor time (B6); and
reducing brightness of the light source when the elapsed time has reached the monitor time (B7).

8. The method according to claim 7, **characterized by** further comprising:
storing status information indicating whether or not the brightness of the light source is reduced; and
in response to an input operation for the application program, restoring the brightness of the light source in a case where the status information indicates that the brightness of the light source is reduced (B9).

9. The method according to claim 7, **characterized by** further comprising:
allowing a user to set the monitor time for each application program or its operating status.

10. The method according to claim 7, **characterized by** further comprising:
allowing a user to enable/disable a monitor operation for each application program or its operating status, wherein
in a case where the monitor operation is enabled, the brightness of the light source is capable of being reduced, and in a case where the monitor operation is disabled, the brightness of the light source is not capable of being reduced.

11. The method according to claim 7, **characterized by** further comprising:
in a case where an error occurs in the application program, delaying a point of time when the brightness of the light source is reduced (C1 to C4).

12. The method according to claim 11,
**characterized by** further comprising:
allowing a user to set an amount of time to be delayed in the delaying for each application program or its operating status.
